# EUROPÄISCHE PATENTSCHRIFT

(11) **EP 0 814 998 B1**
(45) Veröffentlichungstag und Bekanntmachung des Hinweises auf die Patenterteilung: **10.03.1999**
(21) Anmeldenummer: 96909051.3
(22) Anmeldetag: 15.04.1996
(51) Int. Cl.: B62D 21/11, B60G 25/00

(54) **QUERLENKERANORDNUNG**
SUSPENSION ARM ARRANGEMENT
SYSTEME DE BRAS DE SUSPENSION

(30) Priorität: 14.04.1995 DE 29506170 U
(43) Veröffentlichungstag der Anmeldung: 07.01.1998
(73) Patentinhaber: Gesellschaft für Innenhochdruckverfahren mbH & Co.KG, D-73431 Aalen (DE)
(72) Erfinder: KLAAS, Friedrich, D-73432 Aalen (DE)
(74) Vertreter: Neidl-Stippler, Cornelia, Dr.
(86) Internationale Anmeldenummer: DE9600657
(87) Internationale Veröffentlichungsnummer: WO9632312

(56) Entgegenhaltungen:
- EP-A- 0 393 397
- WO-A-96/19373

## Beschreibung

Die Erfindung betrifft eine Querlenkeranordnung mit hohlen Formteilen zur Befestigung von Rädern an Fahrzeugen.

Insbesondere betrifft die Erfindung Querlenkeranordnungen, die beim Innenhochdruck-Umformen zur Ausgestaltung von Formteilen für Achsträger hohle Rohrabschnitte einsetzen, wobei hier unter Rohrabschnitten beliebige langgestreckte umformbare Hohlkörper verstanden werden, also auch umgeformte Vierkantrohre, Sechskantrohre oder andere Hohlprofile, die als Ausgangsmaterialien in einem IHV-Umformschritt verwendet werden. Als Rohre können sowohl extrudierte als auch längsnahtgeschweißte Rohre eingesetzt werden.

Unter Querlenkeranordnung werden hier sogenannte "Raumlenkerachsen" verstanden, die durch das Vorsehen eines Fachwerks, das die verschiedenen Belastungen, die durch die Räder auf die Achsen und damit auf das Fahrzeug übertragen werden, abfangt, teilweise abfedert und elastisch aufnimmt. Meist wird die Elastizität durch eine Tragwerkskonstruktion erreicht, die zwei im wesentlichen zur Fahrzeuglängsachse parallele Längsträgerteile aufweist, die an ihren beiden extremen Enden jeweils eine Öse zur Befestigung an der Fahrzeug-Karosserie aufweisen und über zwei Querteile miteinander verbunden sind. In den Längsträgerteilen sind Aufnahmen - meist Bohrungen - zum elastischen Anschluß von Radträgern vorgesehen, die häufig mit einem elastischen Material ausgekleidet sind, um eine elastische Lagerung der Radträgerteile zu ermöglichen.

Diese Raumlenkerachsen sind gegenüber den früher meist verwendeten Starrachsen erheblich verwindungsfähiger, das Fahrzeug neigt in Kurven weniger zum Ausbrechen und kann daher ein völlig anderes Kurvenverhalten, insbesondere bei hohen Geschwindigkeiten, zeigen.

Die bisherigen Querlenkeranordnungen bestanden hauptsächlich aus massiven Teilen - also massiven Quer- u. Längsträgern.

Diese sind schwer und die Verwindungseigenschaften ihrer Einzelkomponenten sind verbesserungsfähig. Die Montage der Einzelteile war aufwendig, da viele Schraubvorgänge erforderlich waren, die sehr präzise ausgeführt werden müssen.

Aus der WO-A-96/19373 (COSMA) oder EP-A-0 796 194 ist zwar eine Achsanordnung bekanntgeworden, bei der Teile mittels des Innenhochdruckumformverfahrens hergestellt sind - diese Schrift ist nach dem Prioritätsdatum diesen Schutzrechtsannmeldung veröffentlicht und betrifft eine andere Achsgestaltung. Aus der EP-A-0393397 (DAIMLER BENZ) ist eine Hinterachsgruppe bekannt geworden, die einen Querträger sowie zwei Seitenteile in Fahrzeuglängsrichtung verbindende Quertraversen aufweist - über die Herstellung und Aufbau dieser Teile - massiv oder nicht - ist diesem Dokument keine Lehre zu entnehmen.

Es ist daher Aufgabe der Erfindung, eine verbesserte Querlenkeranordnung anzugeben, die leichter und auch einfacher in der Montage bzw. Herstellung ist.

Die Aufgabe wird erfindungsgemäß durch eine Querlenkeranordnung mit hohlen Formteilen zur Befestigung von Radern an einem Fahrzeug, mit einer Tragkonstruktion zur elastischen Aufnahme von Quer- und Langskräften, die über die Rader an diese abgegeben werden, mit zwei hohlen über das Innenhochdruckumformverfahren (IHV-Verfahren) ggf. mit sich ändernden Querschnitten ( D-D, C-C, A-A, B-B ) geformten Hinterachsträgern mit Befestigungseinrichtungen zur Befestigung der Querlenkeranordnung am Fahrzeug, wobei die hohlen, über das IHV-Verfahren ausgeformten Hinterachsträger miteinander verbunden sind, gelöst.

Vorteilhafte Weiterbildungen ergeben sich aus den Unteransprüchen.

Genenüber der Querlenkeranordnung nach der EP-A-0 796 194 (WO-A-96/19373) scheint die vorliegende Erfindung nach dem Anspruch 1 sich zu unterscheiden, daß die zwei hohlen über das Innenhochdruckumformverfahren geformten Achsträger Hinterachsträger sind. Da die EP-A-0 796 194 (WO-A-96/19373) den Prioritätstag vom 20.12.94 genießt und am 27.06.96 veröffentlicht wurde, gilt deren Inhalt als Stand der Technik nach Art.54 (3) und (4) EPÜ mit Ausnahme von Finnland, wobei dieser Stand der Technik für die Frage der erfinderischer Tätigkeit im Sinne vom Art. 56 EPÜ nicht von Bedeutung ist.

Gegenüber massiven Querlenkeranordnungen bieten die sogenannten hohlen Raumlenkerachsen, wie sie schematisch in den Figuren dargestellt sind, einen Gewichtsvorteil von bis zu 50% und gegenüber den bisherigen, Ziehteile aus Stahl verwendenden Querlenkeranordnungen. Dadurch, daß erfindungsgemaß Rohre mit günstigen elastischen und Deformations-Eigen-schaften, wie Rückstellverhalten und Verwindesteifigkeit, eingesetzt werden, ist es moglich, leichtere Materialien - bspw. Aluminium, sowie relativ dünnwandige Metallrohre, die durch das IHV-Verfahren in mechanisch/statisch günstigste Form umgeformt wurden, einzusetzen.

Unter Innenhochdruckverfahren oder auch IHV-Verfahren wird hier das Verfahren verstanden, das beispielsweise im Industrieanzeiger Nr. 20 vom 9.3.1984 beschrieben worden ist oder auch in "Metallumformtechnik", Ausgabe lD/91, Seite 15 ff: A. Ebbinghaus: Präzisionswerkstücke in Leichtbauweise, hergestellt durch Innenhochdruckumformen oder auch "Werkstoff und Betrieb" 123 (1990), 3, Seite 241 bis 243: A. Ebbinghaus: "Wirtschaftliches Konstruieren mit innenhochdruckumgeformten Prazisionswerkstücken" oder auch "Werkstoff und Betrieb" 122, (1991), 11, (1989), Seite 933 bis 938. Nachfolgend wird zur Vermeidung von Wiederholungen auf deren Offenbarung in vollem Umfang Bezug genommen.

Dieses Verfahren wurde bisher bspw. für die Herstellung von Flanschen, wie es in der EP-A-232257 (WO-A-87/01062) beschrieben ist, eingesetzt, wobei es auch bereits bekannt ist, während des Umformens Kräfte in der Hohteil-Längsachse aufzubringen, wodurch eine Materialanhäufung erzielt und die Wandstärke von Kohlteilen bei Ausformungen konstant gehalten werden kann.

Bevorzugt sind die Hohlteile (14, 10) zumindest teilweise aus einem kaltumformbaren, wärmebehandelbaren Metall oder Metallegierung oder Kunststoff und weisen einen zu den Außenkonturen der Hohlteile (14, 10) parallelen Faserverlauf auf.

Bevorzugt kann das Material zumindest teilweise kohlenstoffhaltiger Stahl und/oder zumindest teilweise eine Aluminiumlegierung und/oder ein faserverstärkter Werkstoff wie faserverstarkter Kunststoff oder Metall sein. Bevorzugt sind Achsen-Stahl, wie bspw. St 52 oder eine Aluminiumlegierung, wie eine naturharte Legierung auf Basis von AlMgMn, wie AlMg₅Mn oder eine kaltaushärtende Legierung wie bspw. AlMgSi₁. Es kann sinnvoll sein, daß das Material ausreichend dehnungsfähig, ggf. zum Härten aber auch wärmebehandelbar ist.

Typische Wanddicken der IHV-umgeformten Hohlteile sind dabei - je nach Material - um ca 2 - 3 mm, bevorzugt unter ca 2,5 mm, wodurch eine beträchtliche Gewichtsersparnis erzielt werden kann.

Es ist auch möglich, Schichtnaterialien umzuformen, also solche, die zur Vermeidung von Korrosion oder auch zur Schwingungsdampfung verschiedene Materialschichten aufeinander aufweisen

Nach einer Weiterbildung der Erfindung können die hohlen Formteile mindestens teilweise eingeformte Profile, wie Längs- und/oder Querrippen, aufweisen, die durch ihren Verlauf eine weitere Versteifung oder Verstärkung der Hohlteile, je nach Anforderung, bewirken.

Es wird erfindungsgemaß also das bekannte Innenhochdruckumformverfahren (s. Tagungsband des 14. Umformtechnischen Kolloquiums in Hannover 1993, auf dessen Offenbarung in vollem Umfang bezug genommen wird) zur Herstellung von wesentlichen Bestandteilen der erfindungsgemäßen Querlenkeranordnung eingesetzt. Dabei bietet die uberlegene Formgenauigkeit des Umformverfahrens, das ein tatsächliches Fließen von Material ohne Rückfedern des Materials im Gegensatz zu Biegeverfahren bewirkt die aus technologischer Sicht besonders vorteilhafte hohe Präzision, die nach dem Innenhochdruckumformverfahren hergestellte Hohlteile auszeichnet.

Nachfolgend wird die Erfindung anhand der beigefügten Zeichnung sowie der nachfolgenden Beschreibung näher erlautert. Dabei zeigt:
Fig. 1 eine schematische Darstellung einer erfindungsgemäßen Querlenkeranordnung aus 2 Hohlteilen; sowie Querschnitte durch einzelne Bereiche der Hohlteile;
Fig. 2 eine schematische Darstellung einer weiteren erfindungsgemäßen Querlenkeranordnung mit 4 Hohlteilen; und
Fig. 3 eine schematische Darstellung einer weiteren erfindungsgemäßen Querlenkeranordnung mit 4 Hohlteilen.

Eine erfindungsgemäße Querlenkeranordnung zeichnet sich dadurch aus, daß sie - im Gegensatz zu bisherigen Querlenkeranordnungen - keine Vollprofile besitzt, sondern Hohlteile, die sodann zu einer Tragkonstruktion verbunden werden. Die Längsträger, die sich dreidimensional gebogen im Raum erstrecken, weisen an ihren beiden Enden Befestigungseinrich-tungen 12 od. dgl. zum Befestigen der Anordnung am Kraftfahr-zeug auf, die angeformt oder auch später angeschweißt sein können, während die hohlen Querträger 14 durch Schweißen od. dgl. an den Längsträgern 10, bevorzugt auf an diesen ausgebildeten Ausformungen 16 befestigt sind.

Durch das eingesetzte IHV-Verfahren kann ein äußerst günstiger, zu den Außenkonturen der Hohlteile paralleler Faserverlauf erzielt werden, der zu einer hohen Festigkeit der Hohlteile, damit zu einer geringen Wandstärke bei hoher Festigkeit und auch geringem Gewicht führt. Dadurch ist praktisch ohne Materialschwächung das Biegen der Teile an präzise vorgegebenen Bereichen des Querlenkeranordnung möglich.

Es treten keine Probleme mit möglicher Trennung der Hinterachshohlteile voneinander auf. Es ist wichtig, daß ein Material verwendet wird, das eine ausreichende Kaltverformbarkeit bei gleichzeitiger Elastizität aufweist, um eine Kräfte aufnehmende Tragkonstruktion zu bilden.

Dieses kann bspw. ein geeigneter kohlenstoffhaltiger Stahl sein, der wärmebehandelbar ist, aber auch ausreichend dehnungsfähig, um eine derartig aufwendige Umformung ohne Reißen durchzustehen. Selbstverständlich können andere leichte und/oder feste Materialien je nach Einsatzzweck der Achsanordnung in Fahrzeugen, wie Aluminiumlegierungen, Titanlegierungen und andere Materialien, wie sie dem Fachnann geläufig sind, eingesetzt werden. Je nach Einsatzzweck kann ein teueres, leichtes Material verwendet werden oder auch ein schwereres Material, falls das Gewicht keine wesentliche Komponente darstellt.

Typische Materialien sind AlMg₅Mn oder auch eine kaltaushärtende Legierung, z.B. AlMgSi₁.

Es kann aber auch ein Achsenstahl, wie St 52, eingesetzt werden.

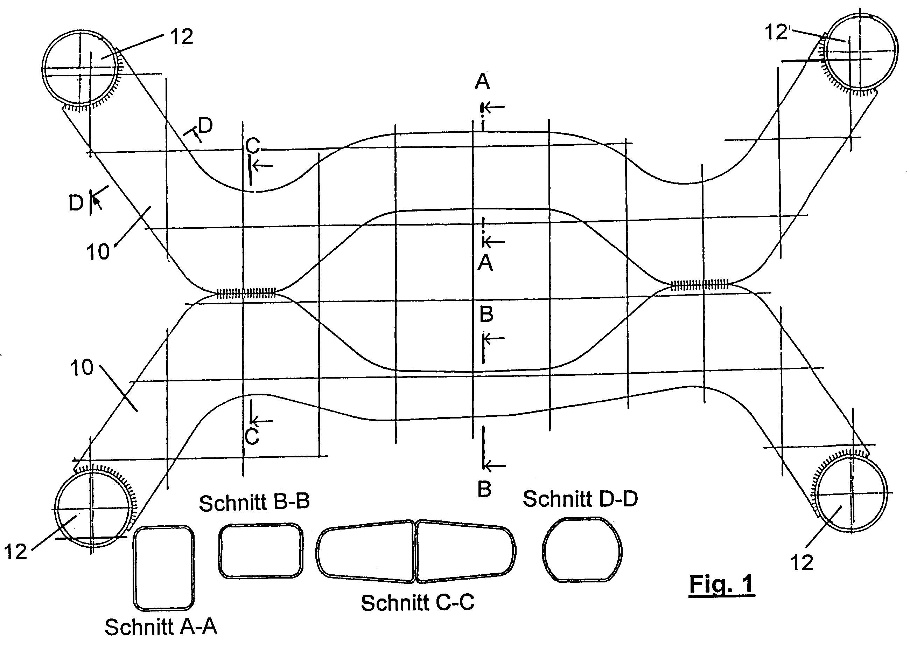

In Fig. 1 ist eine mögliche Ausführungsform einer erfindungsgemäßen Querlenkeranordnung dargestellt, die im wesentlichen aus zwei wellen- oder auch W-formigen IHV-umgeformten Hohlteilen besteht, die so einander gegenüberliegend angeordnet sind, daß sie sich an ihren Wellentalern beruhren. Sie sind an ihrer Beruhrungsstelle durch bekannte Maßnahmen miteinander verbunden, wie Schweißen, Kleben, etc., wie es dem Fachmann für den jeweiligen Werkstoff und Anwendungszweck geläufig ist.

Wie aus den unterhalb der Querlenkeranordnung skizzierten Querschnitten A-A, B-B, C-C und D-D der Fig. 1 ersichtlich, weisen die Hohlteile über ihre Längserstreckung unterschied-liche Querschnitte auf, die der jeweiligen Belastung entsprechend optimiert sind.

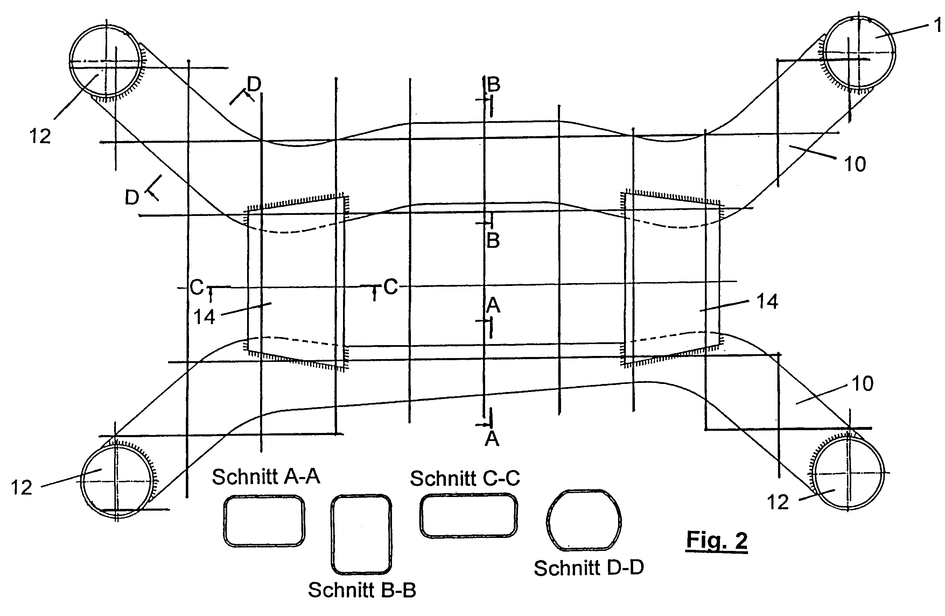

In Fig. 2 ist ein Schnitt durch weitere hohle Querlenkeranordnung gezeigt, die aus 4 IHV-Teilen besteht. Bei dieser Ausfuhrungsform sind zwei im wesentlichen wellenförmige Hohlteile über Hohlteile miteinander verbunden die sich an die Wellentäler anschließen (durch die oben erwähnten, bekannten Verbindungsmaßnahmen, die dem Fachmann geläufig sind). Auch hier weisen die Hohlteile, wie aus den unten in Fig. 2 dargestellten Querschnitten ersichtlich, über ihre Längserstreckung unterschiedliche Querschnitte auf.

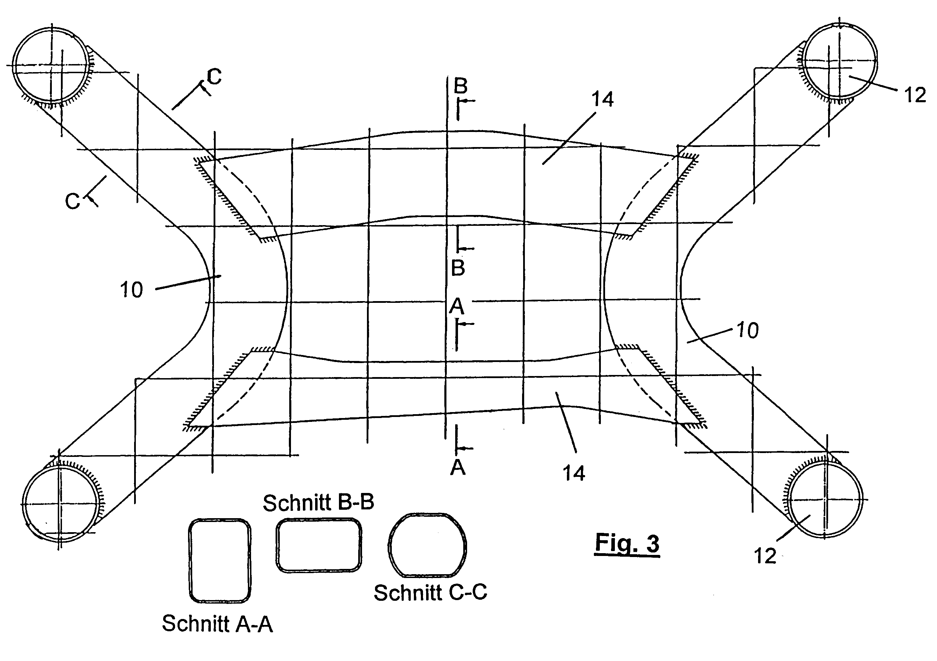

In Fig. 3 schließlich ist eine Querlenkeranordnung dargestellt, bei der zwei im wesentlichen winkelförmige Hohlteil-Längsträger über zwei Verbindungs-Hohlteile verbunden sind.

Der Fachmann wird je nach Einsatzzweck die geeignete Ausführungsform wählen, die optimales Gewicht mit optimalen Fahrwerkseigenschaften verbindet.

Der Träger kann nach dem IHV-Verfahren in bekannter Weise weiterbehandelt, bspw. teilgehärtet, werden. Dafür bieten sich die bekannten Verfahren, wie Nacharbeiten der Hohlteile durch ein oder mehrere Nachbehandlungsverfahren, ausgewählt aus der Gruppe bestehend aus Nitrocarburieren, Plasmanitrieren, Borieren, Laserhärten, Härten ohne Aufkohlen, Induktionshärten, Flammhärten, Elektronenstrahlharten, Einsatzhärten, an, wodurch bspw. den Anschlußteilen, Anschlußöffnungen und evtl. Nebenformelementen, wie Ausformungen u. dgl. eine verbesserte Härte oder Belastbarkeit gegeben werden kann.

Obwohl nur drei bevorzugte Ausführungsformen für eine erfindungsgemäße Querlenkeranordnung erläutert worden sind, ist die Erfindung keineswegs auf diese beschränkt und Abwandlungen und Abänderungen innerhalb des Schutzumfangs der Ansprüche sind dem Fachmann geläufig.

## Patentansprüche

1. Querlenkeranordnung mit hohlen Formteilen zur Befestigung von Rädern an einem Fahrzeug, mit einer Tragkonstruktion zur elastischen Aufnahme von Quer- und Längskräften, die über die Räder an diese abgegeben werden, mit zwei hohlen über das Innenhochdruckumformverfahren (IHV-Verfahren) ggf. mit sich ändernden Querschnitten (D-D, C-C, A-A, B-B ) geformten Hinterachsträgern (10) mit Berestigungseinrichtungen (12) zur Befestigung der Querlenkeranordnung am Kraftfahrzeug, wobei die hohlen, über das IHV-Verfahren ausgeformten Hinterachsträger (10) miteinander verbunden sind.

2. Querlenkeranordnung nach Anspruch 1, dadurch gekennzeichnet, daß die hohlen Hinterachsträger (10) in etwa wellenförmig ausgebildet sind und so einander gegenüberliegend angeordnet sind, daß sich die Wellentäler berühren und diese an den beiden Berührungsstellen miteinander verbunden sind.

3. Querlenkeranordnung. nach Anspruch 1 oder 2, dadurch gekennzeichnet, daß die hohlen Hinterachsträger (10) über mindestens zwei hohle Verbindungsteile (14) miteinander verbunden sind.

4. Querlenkeranordnung nach Anspruch 1, dadurch gekennzeichnet, daß die Hinterachsträger im wesentlichen winkelförmig ausgebildet sind und durch zwei im wesentlichen quer zur Fahrzeuglängsachse verlaufende hohle Verbindungsteile (14) miteinander verbunden sind.

5. Querlenkeranordnung nach einem der vorangehenden Ansprüche, dadurch gekennzeichnet, daß die Hohlteile (14, 10) zumindest teilweise aus einem kaltumformbaren, Metall oder Metallegierung oder Kunststoff bestehen und einen zu den Außenkonturen der Hohlteile (14, 10) parallelen Faserverlauf aufweisen.

6. Querlenkeranordnung mit hohlen Formteilen nach einem der vorangehenden Ansprüche, dadurch gekennzeichnet, daß das Material zumindest teilweise kohlenstoffhaltiger stahl und/oder zumindest teilweise eine Aluminiumlegierung ist.

7. Querlenkeranordnung nach Anspruch 6, dadurch gekennzeichnet, daß die Al-Legierung eine naturharte Legierung oder eine kaltaushärtende Legierung ist.

8. Querlenkeranordnung nach einem der vorangehenden Ansprüche, dadurch gekennzeichnet, daß das Material zumindest teilweise ein faserverstärkter Werkstoff ist.

9. Querlenkeranordnung nach einem der vorangehenden Ansprüche, dadurch gekennzeichnet, daß die hohlen Formteile (10, 14) mindestens teilweise eingeformte Profile, wie Längs- und/oder Querrippen, aufweisen.

## Claims

1. Transverse guide arrangement, having hollow shaped parts for securing wheels on a vehicle, a supporting structure for resiliently absorbing transverse and longitudinal forces which are transmitted thereto via the wheels, two hollow rear axle supports (10), possibly with varying cross-sections (D-D, C-C, A-A, B-B), which supports are shaped by the internal high-pressure transforming method (IHV method) and having securing means (12) for securing the transverse guide arrangement on the automotive vehicle, wherein the hollow rear axle supports (10), which have been shaped by the IHV method, are interconnected.

2. Transverse guide arrangement according to claim 1, characterised in that the hollow rear axle supports (10) have a substantially undulatory configuration and are disposed opposite each other in such a manner that the undulation troughs touch one another, and said troughs are interconnected at the two points of contact.

3. Transverse guide arrangement according to claim 1 or 2, characterised in that the hollow rear axle supports (10) are interconnected via at least two hollow connecting members (14).

4. Transverse guide arrangement according to claim 1, characterised in that the rear axle supports have a substantially angular configuration and are interconnected by two hollow connecting members (14) extending substantially transversely relative to the longitudinal axis of the vehicle.

5. Transverse guide arrangement according to one of the preceding claims, characterised in that the hollow parts (14, 10) are formed, at least partially, from a cold-transformable metal or metal alloy or plastics material and have a fibre flow parallel to the external configurations of the hollow parts (14, 10).

6. Transverse guide arrangement with hollow shaped parts according to one of the preceding claims, characterised in that the material is, at least partially, carbon-containing steel and/or, at least partially, an aluminium alloy.

7. Transverse guide arrangement according to claim 6, characterised in that the Al alloy is a naturally hard alloy or a cold-hardening alloy.

8. Transverse guide arrangement according to one of the preceding claims, characterised in that the material is, at least partially, a fibrereinforced material.

9. Transverse guide arrangement according to one of the preceding claims, characterised in that the hollow shaped parts (10, 14) have at least partially moulded profiles, such as longitudinal and/or transverse ribs.

## Revendications

1. Agencement de bras de suspension ayant des pièces creuses pour la fixation de roues à un véhicule, comportant une construction de support pour recevoir, de façon élastique, des forces transversales et longitudinales, qui sont transmises à celle-ci par l'intermédiaire des roues, deux supports d'essieu arrière (10) creux, formés par le procédé de déformation sous pression élevée interne (procédé IHV), le cas échéant avec des sections transversales différentes (D-D, C-C, A-A, B-B), avec des dispositifs de fixation (12) pour la fixation de l'agencement de bras de suspension au véhicule automobile, les supports d'essieu arrière (10) creux, formés par le procédé IHV étant reliés ensemble.

2. Agencement de bras de suspension selon la revendication 1,
caractérisé en ce que les supports d'essieu arrière creux (10) sont réalisés sous une forme sensiblement ondulée et sont agencés de facon opposée l'un à l'autre, de sorte que les creux des ondes sont en contact et ceux-ci sont reliés ensemble aux deux points de contact.

3. Agencement de bras de suspension selon la revendication 1 ou 2,
caractérisé en ce que les supports d'essieu arrière creux (10) sont reliés ensemble par l'intermédiaire d'au moins deux pièces de liaison creuses (14).

4. Agencement de bras de suspension selon la revendication 1,
caractérisé en ce que les supports d'essieu arrière sont réalisés généralement sous une forme angulaire et sont reliés ensemble par deux pièces de liaison creuses (14) s'étendant généralement transversalement par rapport à l'axe longitudinal du véhicule

5. Agencement de bras de suspension selon une des revendications précédentes,
caractérisé en ce que les pièces creuses (14,10) sont constituées au moins partiellement en une matière synthétique, un alliage métallique ou un métal déformable à froid, et présentent un tracé des fibres parallèle aux contours externes des pièces creuses (14,10).

6. Agencement de bras de suspension ayant des pièces creuses selon une des revendications précédentes,
caractérisé en ce que la matière est au moins partiellement de l'acier contenant du carbone et/ou au moins partiellement un alliage d'aluminium.

7. Agencement de bras de suspension selon la revendication 6,
caractérisé en ce que l'alliage d'aluminium est un alliage de dureté naturelie ou un alliage durci à froid.

8. Agencement de bras de suspension selon une des revendicatons précédentes,
caractérisé en ce que la matière est au moins partiellement une matière renforcée par des fibres.

9. Agencement de bras de suspension selon une des revendications précédentes,
caractérisé en ce que les pièces creuses (10,14) présentent au moins partiellement des profilés moulés, comme des nervures longitudinales et/ou des nervures transversales.
